# EUROPÄISCHE PATENTSCHRIFT

(11) **EP 0 597 907 B1**
(45) Veröffentlichungstag und Bekanntmachung des Hinweises auf die Patenterteilung: **27.12.1995**
(21) Anmeldenummer: 92916017.4
(22) Anmeldetag: 20.07.1992
(51) Int. Cl.: A47J 37/04, A47J 39/00

(54) **GARGERÄT FÜR STÜCKIGES GARGUT**
COOKING DEVICE FOR FOOD IN PIECE FORM
APPAREIL A FRIRE POUR ALIMENTS EN MORCEAUX

(30) Priorität: 25.07.1991 DE 4124742
(43) Veröffentlichungstag der Anmeldung: 25.05.1994
(73) Patentinhaber: ELOMA GmbH BEDARFSARTIKEL ZUR GEMEINSCHAFTSVERPFLEGUNG, D-82216 Maisach (DE)
(72) Erfinder: SPANN, Gustav, D-82275 Emmering (DE)
(74) Vertreter: Bohnenberger, Johannes, Dr.
(86) Internationale Anmeldenummer: EP9201648
(87) Internationale Veröffentlichungsnummer: WO9301741

(56) Entgegenhaltungen:
- DE-A- 2 144 358
- DE-A- 2 541 374
- DE-U- 7 434 044
- GB-A- 1 239 496
- US-A- 3 827 346

## Beschreibung

Die Erfindung betrifft ein Gargerät für stückiges Gargut nach dem Oberbegriff des Patentanspruches 1.

Insbesondere handelt es sich bei dem hier genannten stückigen Gargut um Pommes Frites oder dergleichen Gargut, das normalerweise in heißem Fett fritiert wird. Das Fritieren in Fett ist aber nicht nur aufgrund des Fettverbrauches teuer und aufgrund der Entsorgung des Fettes umweltbelastend, vielmehr sind auch die so zubereiteten Nahrungsmittel aus ernährungsphysiologischen Gründen unbeliebt.

Aus der DE-A-21 27 758 ist eine Fritiereinrichtung bekannt, bei welcher die Pommes Frites in einer beidseitig offenen, sich drehenden Trommel liegen und von einer Wärmestrahlungsquelle gegart werden sollen. Es zeigte sich jedoch, daß derart zubereitete Pommes Frites nicht korrekt gebräunt und (somit) geschmacklich nicht den Verbraucherwünschen angepaßt sind.

Aus den DE-A-21 44 358, DE-A-24 48 402, DE-A-24 48 403 und aus der US-A-4 155 294 sind Gargeräte der eingangs genannten Art bekannt. Die mit diesen Geräten herstellbaren Pommes Frites entsprechen aber in ihrem Geschmack immer noch nicht den Verbraucherwünschen. Darüber hinaus entstehen beim Garen mit diesen Geräten Dämpfe und Rauch, was zu einer nicht tolerierbaren Umweltbelästigung führt, wenn man keine gesonderten Einrichtungen zum Abführung und Neutralisieren der Gase bzw. des Rauchs vorsieht. Darüber hinaus sind die bekannten Gargeräte unhandlich zu bedienen, was sowohl die Beschickung mit frischem Gargut, die Entnahme des fertig gegarten Gutes und auch die im Nahrungsmittelbereich extrem wichtige Reinigung der Geräte betrifft. Insgesamt ist also der Aufwand zum Betreiben der Geräte unvertretbar hoch.

Aus der US-A- 3 827 346 ist ein herkömmlicher Umluftofen bekannt, dessen Gebläse heiße Luft fördert und möglichst gleichmäßig in einem Garraum verteilt. Ein solcher Umluftofen ist nicht dazu geeignet, Pommes Frites in professioneller Weise herzustellen.

Der Erfindung liegt die Aufgabe zugrunde, ein Gargerät der eingangs genannten Art dahingehend auszubilden, daß mit geringem baulichem Aufwand die Bräunung des Gargutes verbessert wird.

Vorzugsweise ist das Gehäuse in einem, den Korb umschließenden Abschnitt als Trommel symmetrisch zur horizontalen Drehachse des Korbes ausgebildet, so daß das Volumen des Gehäuses minimal wird. Dadurch ergibt sich eine ebenfalls minimierte Aufheizzeit.

Vorzugsweise ist die den Korb umgebende Trommel drehbar ausgebildet, so daß sie zusammen mit dem Korb gedreht und dieser in der Trommel gehalten werden kann. Dadurch muß das Drehlager nicht im Innenraum angeordnet sein, was nicht nur einen geringeren Bauaufwand, sondern auch eine vereinfachte Reinigung mit sich bringt. Vorzugsweise ist hierbei die Trommel abnehmbar ausgebildet, so daß das Reinigen weiter erleichtert wird.

In diesem Fall bildet man die Antriebseinrichtungen so aus, daß sie ausschließlich auf die Trommel wirken, welche den Korb mitnimmt. Hierbei wird die Anordnung dann besonders einfach, wenn die Antriebseinrichtung gleichzeitig als Lager für die Trommel (samt Korb) ausgebildet ist. Diese Anordnung ist dann besonders einfach, wenn die Antriebseinrichtung ein Paar von parallelen, in einer Horizontalebene angeordneten Wellen umfaßt, wie dies an sich aus der DE-GM 74 34 044 bekannt ist. Im Gegensatz zu dieser bekannten Anordnung sind jedoch auf den Wellen Rollen angebracht, auf welchen die Trommel im wesentlichen frei liegt. Dadurch wird zum einen eine bessere Führung der Trommel, zum anderen ein geringerer Wärmeübergang gewährleistet. Vorzugsweise ist der Korb aus einer Einschuböffnung des Gehäuses herausziehbar angeordnet und weist eine Endplatte auf, welche die Einschuböffnung bei eingeschobenem Korb verschließt. Eine gesonderte Gehäusetür oder dergleichen ist somit nicht notwendig.

Wenn der Korb aus einer Einschuböffnung des Gehäuses herausziehbar angeordnet ist, so ist es von Vorteil, wenn eine Verschlußeinrichtung vorgesehen und derart angeordnet ist, daß die Einschuböffnung bei herausgenommenem Korb selbsttätig verschlossen wird. Dadurch ist gewährleistet, daß bei der Entnahme von Gargut das Gehäuseinnere nur ganz kurze Zeit und auch nur über eine geringe Öffnung mit der Umgebung kommuniziert, so daß weder eine Abkühlung im Gehäuseinneren, noch ein Entlassen von Dämpfen stattfinden. Diese Anordnung wird dann besonders einfach, wenn die Verschlußeinrichtung eine Abedeckplatte umfaßt, die mittels einer Feder zwischen der Abdeckplatte und einem ortsfesten Gehäuseteil in Richtung auf die Einschuböffnung gedrückt wird, so daß die Abdeckplatte beim Einschieben des Korbes auf dessen in Einschubrichtung gesehen vorderen Korbrand aufliegt und in das Innere des Gehäuses zusammen mit dem Korb hineingeschoben wird. Beim Herausziehen des Korbes erfolgt die umgekehrte Bewegung.

Vorzugsweise ist am Gehäuse eine Gleitwelle befestigt, auf welcher der Korb längs verschieblich abnehmbar sitzt. Durch diese Anordnung ist eine exakte und sichere Fixierung des Korbes zum Gehäuse auch im rauhen Küchenbetrieb möglich. Wenn in diesem Fall eine Abdeckplatte und eine Feder zu deren Betätigung vorgesehen sind, so ist es von Vorteil, wenn diese auf der Gleitwelle längs verschieblich geführt sind.

Diese Gleitwelle kann auch zum Antrieb des Korbes (bei feststehendem Gehäuse) dienen. In diesem Fall wird die Antriebswelle des Gebläse-Elektromotors vorzugsweise als Hohlwelle ausgebildet, so daß die Gleitwelle unter gleichzeitiger Lagerung in der Hohlwelle durch diese hindurch zu einem, hinter dem Gebläsemotor angeflanschten Getriebemotor geführt werden kann.

Vorzugsweise umfaßt die Verschlußeinrichtung weiterhin einen Luftleitring, der bei eingeschobenem Korb zusammen mit der Abdeckplatte einen Strömungskanal bildet und der bei herausgenommenem Korb zwischen der Abdeckplatte und dem Dichtrand und der Einschuböffnung eingeklemmt wird. Durch diese Anordnung ist gewährleistet, daß die zum Garen notwendige Luftströmung in das Korbinnere oder aus diesem heraus exakt von dem Luftstrom in der Umgebung des Korbes getrennt wird, da der Luftleitring dicht auf dem Korb aufsitzt.

Bei einer Ausführungsform der Erfindung weist das Gebläse ein radial nach außen förderndes Rad auf. In diesem Fall ist die Heizung vorteilhafterweise rings um das Gebläserad oder zumindest dieses zu einem wesentlichen Teil umschließend angeordnet.

Bei einer Ausführungsform der Erfindung ist das Gebläse derart ausgebildet, daß die Luft von der Außenseite des Korbes durch dessen Öffnungen in dessen Innenseite strömt und aus dem Inneren wieder in das Gebläse gesaugt wird. Bei einer alternativen Ausführungsform der Erfindung ist das Gebläse derart ausgebildet, daß die Luft in der umgekehrten Richtung, also von der Innenseite des Korbes durch die Öffnungen zu seiner Außenseite strömt. Beide Ausführungsformen haben ihre Vorteile, wie dies weiter unten näher erläutert wird.

Wenn die Luft von Innen nach außen strömt, so ist es von Vorteil, wenn im Inneren des Korbes ein Luftleitrohr mit Auslaßöffnungen zur gleichmäßigen Verteilung des Luftstroms vorgesehen ist. Die Heizung kann man dann in vorteilhafter Weise innerhalb des Luftleitrohres anordnen.

Das Gebläse liegt vorteilhafterweise außerhalb des Korbes beim vorderen (in Einschubrichtung gesehen) Korbrand. Auf diese Weise wird ein kompakter Aufbau erreicht, so daß die Anordnung leicht zu reinigen ist.

Von besonderem, überraschendem Effekt ist eine Heizeinrichtung, die auf eine vorbestimmte, relativ hohe Temperatur aufheizbar ist, so daß Geruchs- und Rauchpartikel an der Heizeinrichtung abgebaut werden. Diese Heizeinrichtung kann eine gesonderte Einrichtung sein, sie kann aber auch einen Abschnitt der eigentlichen, zum Garen benötigten Heizeinrichtung umfassen, der auf eine hierfür geeignete Temperatur aufheizbar ist. Letzerer Fall ist beispielsweise dadurch zu verwirklichen, daß man die Heizeinrichtung abschnittsweise so anordnet, daß die Wärmeabfuhr geringer als in den übrigen Abschnitten ist, so daß die Heizeinrichtung (z. B. ein elektrischer Heizkörper) an dieser Stelle besonders heiß wird. Ein so ausgerüstetes Gerät arbeitet praktisch geruchsfrei, was von erheblicher Bedeutung für die Variabilität des Aufstellortes ist. Es muß nämlich kein Dunstabzug an dem Aufstellungsort vorhanden sein, so daß eine Aufstellung überall in der Küche oder auch in einem verfahrbaren Stand ohne weiteres tolerierbar ist.

Vorzugsweise ist eine, ins Innere des Gehäuses führende Abführleitung für Dämpfe und dergleichen vorgesehen, wobei insbesondere in der Abführleitung eine Einrichtung zum Niederschlagen von Dämpfen aus dem Inneren des Gehäuses vorgesehen ist. Diese Einrichtung zum Niederschlagen kann eine Düse zum Einspritzen von Wasser umfassen. Dadurch ist gewährleistet, daß eine ständige Auffrischung der Luft im Gehäuseinnenraum stattfindet und darüber hinaus auch kein Austreten von Dämpfen an Gehäuseleckstellen stattfindet, da das Gehäuseinnere bei einem leichten Unterdruck gehalten werden kann.

Um das Gerät zu reinigen, wird vorteilhafterweise eine Einrichtung zum Einspritzen von Wasser in das Gehäuseinnere vorgesehen. Beim Reinigen läßt man das Gebläse, vorzugsweise auch die Heizung laufen und spritzt bei leerem Korb eine hinreichende Menge von Wasser (ggf. unter Zugabe von Detergenzien etc.) ein, läßt das Wasser, das teilweise verdampft und teilweise versprüht wird, umlaufen und führt das Schmutzwasser kontinuierlich ab.

Bei einer alternativen Ausführungsform der Erfindung ist der Korb drehbar im Gehäuse gelagert, das Gehäuse steht also still. Dies erleichtert die Abdichtung. Der Korb selbst ist insofern zweiteilig ausgeführt, als ein Teil nur zu Reinigungszwecken aus dem Gehäuse herausgenommen wird, der andere Gehäuseteil ist als schubladenförmiger Einsatz ausgebildet und über eine entsprechende Schienenführung in den eigentlichen Korb eingesetzt. Der Drehantrieb ist hier (wie auch bei den anderen Ausführungsformen der Erfindung) so ausgebildet, daß beim Abschalten über einen Endschalter der Antriebsmotor so gesteuert wird, daß er in einer bestimmten Winkelstellung des Korbes stehenbleibt. In dieser Winkelstellung liegt dann der Auszugskorb so, daß er nach oben offen ist, das Gargut also in ihm liegt und beim Herausziehen nicht herausfallen kann.

Vorzugsweise ist bei dieser Ausführungsform der Erfindung der Antriebsmotor für das Gebläse mit einer Hohlwelle ausgestattet. Das Gebläserad weist eine Nabe auf, die eine mittige Bohrung trägt. Die Antriebseinrichtung zum Drehen des Korbes ist über eine Antriebswelle mit dem Korb in drehfester (aber axial lösbarer) Verbindung, wobei diese Antriebswelle durch die Hohlwelle und die Nabe hindurchgeführt ist. Dieser Aufbau hat neben einer hohen Kompaktheit auch den Vorteil, daß nur wenige Teile verschmutzen können. Die Antriebswelle ist vorzugsweise kippfest gelagert, während der Korb mit seinem gehäuseinneren Ende zu Reinigungszwecken abnehmbar an der Antriebswelle befestigt ist. Am gehäuseäußeren Ende ist der Korb drehbar gelagert. Dadurch ergibt sich eine einfache und dennoch sehr stabile Lagerung des Korbes.

Weitere bevorzugte Ausführungsformen der Erfindung ergeben sich aus den Unteransprüchen.

Nachfolgend wird die Erfindung anhand von Ausführungsbeispielen näher erläutert. Hierbei Zeigen:
- Fig. 1: eine erste bevorzugte Ausführungsform der Erfindung in einem schematisierten Längsschnitt,
- Fig. 2: eine schematisierte teilgeschnittene Darstellung des Gehäuseendabschnittes mit herausgenommenem Korb,
- Fig. 3: einen Schnitt entlang der Linie III-III aus Fig. 2,
- Fig. 4: eine zweite Ausführungsform der Erfindung ähnlich der nach Fig. 1 bis 3, jedoch mit einer Gas- anstelle einer Elektroheizung,
- Fig. 5: eine schematisierte Draufsicht auf das Gebläse mit Gasheizung gemäß Fig. 4,
- Fig. 6: einen Längsschnitt durch eine weitere bevorzugte Ausführungsform der Erfindung mit umgekehrter Luftströmungsrichtung,
- Fig. 7-10: Vorder- bzw. Seitenansichten von weiteren bevorzugten Ausführungsformen der Erfindung,
- Fig. 11 und 12: weitere Ausführungsformen in Darstellung ähnlich Fig. 1, und
- Fig. 13: eine weitere bevorzugte Ausführungsform ähnlich der nach Fig. 11 und 12.

In der nachfolgenden Beschreibung werden gleiche und gleichwirkende Teile mit denselben Bezugsziffern versehen.

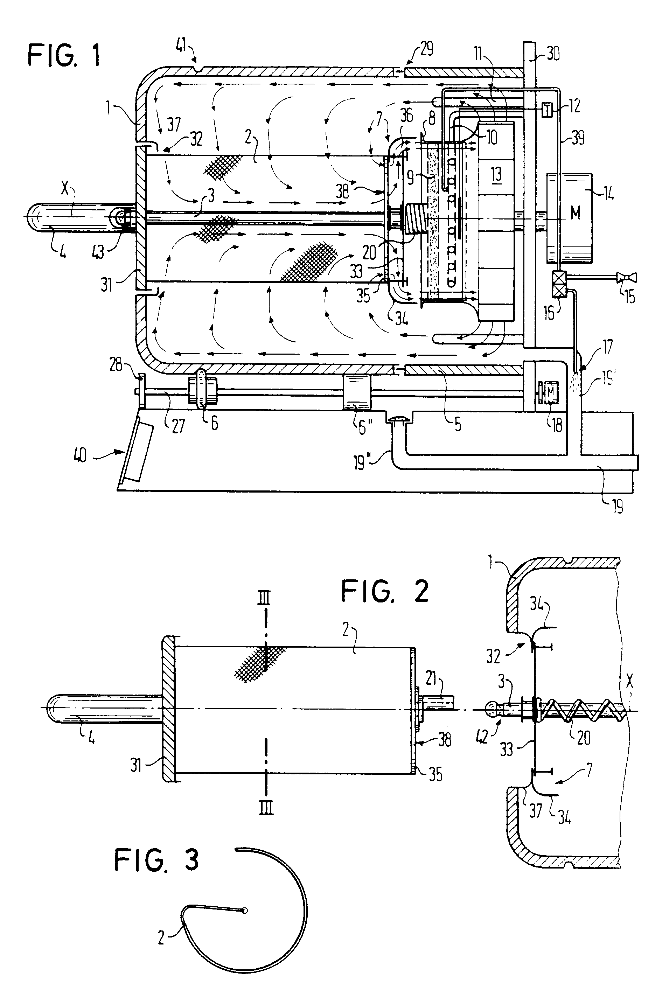

Bei der in Fig. 1 gezeigten Ausführungsform der Erfindung ist auf einem Sockel 40 eine Gehäuseplatte 30 fest montiert. An der Gehäuseplatte 30 ein trommelförmiges festes Gehäuseteil 5 angebracht, das über eine Labyrinthdichtung 29 in eine abnehmbare Trommel 1 übergeht.

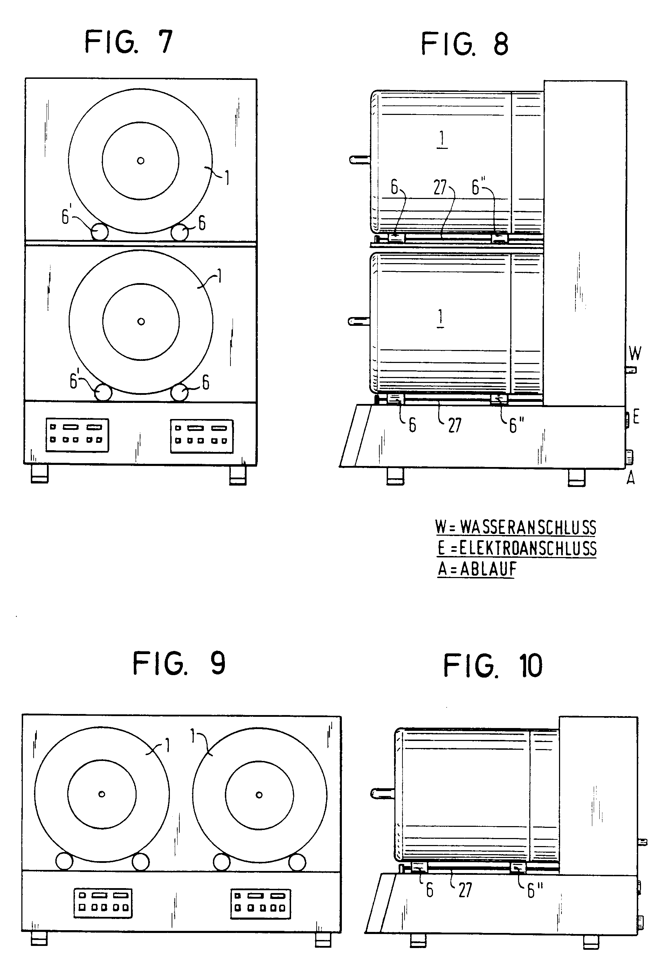

Die Trommel 1 ist auf einem Satz von Rollen 6 gelagert, die auf Wellen 27 angeordnet sind. Die Wellen 27 und damit die Rollen 6 sind in einer Horizontalebene, parallel zueinander angeordet (siehe Fig. 7 - 10). Die Wellen 27 sind an ihrem einen Ende in der Gehäuseplatte 30, an ihrem anderen Ende in einem Endlager 28 auf dem Sockel 40 drehbar gelagert. Auf der Gehäuseplatte 30 ist ein Getriebemotor 18 zum Drehen mindestens einer der Wellen 27 vorgesehen.

Mindestens eine der Rollen, in Fig. 1 die Rolle 6, läuft in einer Umfangsnut 41 in der Trommel 1.

Durch diese Anordnung ist gewährleistet, daß die Trommel 1 einerseits exakt zentriert zum festen Trommelgehäuse 5 drehbar gelagert ist und die Labyrinthdichtung 29 mit relativ geringen Toleranzen ausgebildet sein kann, andererseits aber die Trommel 1 extrem leicht abgenommen werden kann. Darüber hinaus weist das Lager für die Trommel 1 keinerlei unzugängliche und die Reinigung erschwerende Teile auf. Somit kann die Trommel 1 z. B. als Tiefziehteil aus Edelstahl gefertigt werden.

An der Lagerplatte 30 ist innerhalb des festen Trommelgehäuses 5 ein Radialgebläserad 13 montiert, das über einen, hinter der Gehäuseplatte 30 montierten Elektro-Gebläsemotor 14 antreibbar ist. Rings um das Gebläserad 13 sind an der Gehäuseplatte 30 (Widerstands-) Heizelemente 11 angeordet. Dadurch wird die bei Betrieb des Gebläsemotors 14 radial nach außen geförderte Luft (siehe Pfeile in den Abbildungen) an den Heizelementen 11 vorbei bzw. zwischen diesen hindurch gefördert und erwärmt. Vor dem Gebläserad 13 sitzt ein ringförmiges Luftleitblech 7. In diesem befindet sich eine (herausnehmbare) Filtermatte 9. Zwischen der Filtermatte 9 und dem Einlaß des Gebläserades 13 ist eine, gesondert ansteuerbare Heizung 10 angeordnet, welche auf eine so hohe Temperatur einstellbar ist, daß im Luftstrom nach dem Filter 9 noch enthaltene Rauch- und Geruchspartikel pyrolytisch abgebaut werden können.

Weiterhin ist ein Thermostat 12 vorgehesen, mittels dessen die Temperatur der im Gehäuse umgewälzten Luft auf einen voreinstellbaren Wert geregelt werden kann.

Die Trommel 1 weist auf ihrem, der Labyrinthdichtung 19 gegenüberliegenden Ende eine, zu ihrer Drehachse symmetrische Einschuböffnung 32 auf, welche von einem, nach innen ragenden Dichtrand 37 umgrenzt wird.

In die Einschuböffnung 32 ist ein Korb 2 einschiebbar, der an seinem (im eingeschobenen Zustand) äußeren Ende eine Endplatte 31 aufweist. Diese Endplatte 31 ist in ihrer Form derjenigen der Einschuböffnung 32 angepaßt, so daß bei eingeschobenem Korb 2 ein im wesentlicher abgedichteter Innenraum entsteht.

Der Korb 2 weist weiterhin an seinem, dem Gebläserad 13 zugewandten Ende eine Öffnung 38 auf, die von einem vorderen Korbrand 35 umgrenzt ist. Durch diese Öffnung 38 kann ein Luftstrom axial zum Mantel des Korbes 2 aus diesem austreten.

Auf der dem Korb 2 gegenüberliegenden Seite der Endplatte 31 ist ein (wärmeisolierter) Griff 4 angebracht.

Bei einer Ausführungsform der Erfindung ist der Drahtgitter-Mantel des Korbes, wie in Fig. 3 gezeigt, in Längsrichtung teilweise offen und weist einen spiralabschnittsförmigen Querschnitt auf. Bei einer entsprechenden Drehrichtung (in Fig. 3 im Uhrzeigersinn) bleibt Gargut innerhalb des Korbes, kann aber bei herausgenommenem Korb leicht entleert werden. Selbstverständlich muß der Korb auch nicht zylindrisch sein, sondern kann auch flach ausgebildet werden.

Im Gehäuse ist weiterhin eine Gleitwelle 3 symmetrisch zur Drehachse X fest montiert. Auf der Gleitwelle 3 sitzt in deren Längsrichtung verschiebbar eine Platte 33, die an ihrem Umfangsrand über einen gewissen Abstand in Achsrichtung beweglich mit einem Luftleitring 34 verbunden ist. Bei der in Fig. 2 gezeigten Position, bei welcher der Korb 2 aus dem Gehäuse herausgenommen ist, drückt die Feder 2 die Abdeckplatte 33 und damit zugleich den Luftleitring 34 auf den Dichtrand 37 rings um die Einschuböffnung 32, so daß diese vollständig abgedichtet ist.

Setzt man den Korb 2 unter Zentrierung durch die Gleitwelle 3 in die Gehäusetrommel 1 ein, so gelangt eine Aufnahme 21 in eine entsprechende Ausnehmung der Abdeckplatte 33, so daß diese mit dem Korb 2 drehfest verbunden ist. Beim weiteren Einschieben wird die Abdeckplatte 33 in das Gehäuse hineingeschoben und bewegt sich relativ zum Luftleitring 34 derart, daß zwischen diesem und der Abdeckplatte 33 ein Strömungskanal 36 gebildet wird, wie dieser in Fig. 1 gezeigt ist. In der Endposition (Fig. 1) sitzt der dem Gebläserad 13 zugewandte Endrand des Luftleitring 34 kurz über dem ihm zugewandten Endrand des ringförmigen Luftleitblechs 8, so daß ein im wesentlicher dichter Strömungskanal zwischen der Öffnung 38 des Korb 2 und dem Einlaß des Gehläserads 13 gebildet ist. In dieser Endposition schnappt eine Verbindungseinrichtung 43 im Griff 4 in eine Umfangsnut 42 der Gleitwelle 3, so daß der Korb 2 entgegen der Kraft der Feder 20 festgehalten ist.

Beim erneuten Herausnehmen wird durch diese Anordnung die Öffnung 32 selbsttätig mittels der Abdeckplatte 33 zusammen mit dem Luftleitring 34 dicht verschlossen.

In das Innere des Gehäuses führt eine Ablaufleitung 19', die in einen Ablauf 19 mündet. Eine weitere Ablaufleitung 19'' ist mit ihrem einen Ende mit dem Ablauf 19 verbunden und mündet an der tiefsten Stelle eines Auffangbleches auf dem Sockel 40, das unter der Trommel 4 angeordnet ist.

In der Ablaufleitung 19' ist eine Wassereinspritzeinrichtung 17 angeordnet, die über ein Magnetventil 16 mit einem Wasserzulauf 15 verbunden ist. Bei geöffnetem Ventil 16 wird somit Wasser eingespritzt, so daß einerseits ein gewisser Unterdruck in der Ablaufleitung 19' entsteht und Luft aus dem Innenraum des Gehäusees abgezogen wird, wobei Frischluft durch die zwangsläufig vorhandenen Spalte nachströmt. Andererseits werden durch das Einspritzen von Wasser in der Luft enthaltene feste, flüssige oder gasförmige Stoffe niedergeschlagen bzw. gelöst und dadurch in ihrer Geruchswirkung neutralisiert.

Zum Reinigen des Gerätes ist eine weitere Wassereinspritzleitung 39 vorgesehen, welche an ihrem einen Ende über ein weiteres Magnetventil 16 mit dem Wasserzulauf 15 verbunden ist und an ihrem anderen Ende vor dem Gebläserad 13, vorzugsweise im Bereich bzw. über der Nabe des Gebläserades 13 (ohne Düse) mündet, so daß bei geöffnetem Ventil Wasser von der Nabe des Gebläserades bzw. von diesem selbst verteilt und zusammen mit dem Luftstrom radial nach außen gefördert wird. Dieses fein zerstäubte Wasser wird sowohl durch die nach dem Betrieb heißen Metallteile, als auch insbesondere durch eine eingeschaltete Heizung erwärmt, so daß sich im Inneren des Gehäuses ein Naßdampfmilieu bildet, so daß Schmutzteilchen abgelöst und über die Ablaufleitung 19' in den Ablauf 19 gefördert werden.

Im Garbetrieb wird die vom Gebläserad 13 nach außen geförderte Luft von der Heizung 11 erhitzt und strömt axial zum Korb 1, radial zu dessen Öffnungen nach innen und dabei durch das Gargut hindurch, bis die Luft innerhalb des Korbs 2 axial zu diesem in Richtung auf das Gebläserad 13 und durch die Filtermatte 9 hindurch strömt und wieder angesaugt wird. Dabei werden gleichzeitig Geruchsstoffe, Rauchpartikel und dergleichen von der pyrolytischen Heizung 10 neutralisiert.

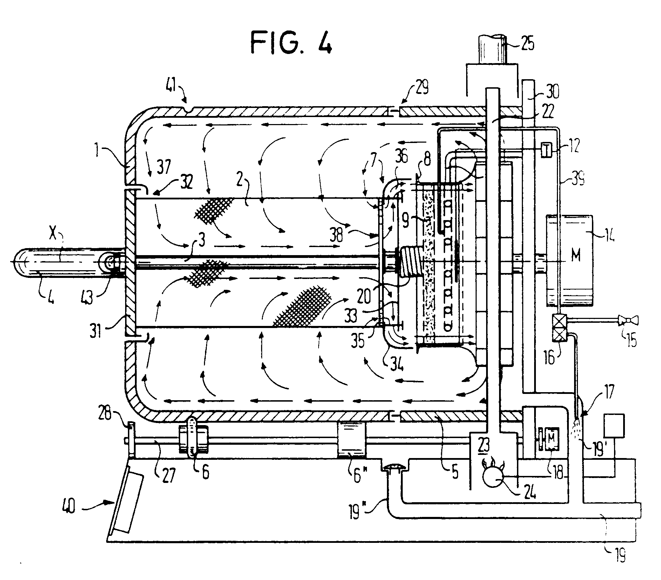

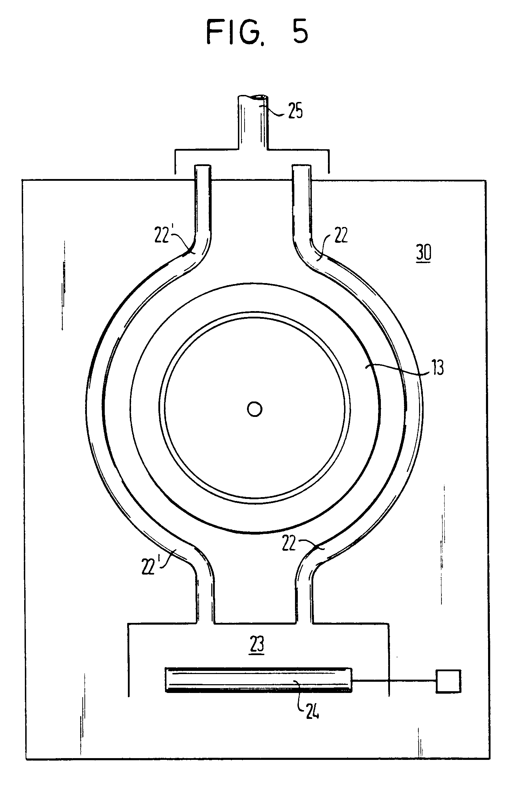

Die in Fig. 4 und 5 gezeigte Ausführungsform der Erfindung unterscheidet sich von der nach Fig. 1 - 3 dadurch, daß anstelle einer elektrischen Heizung 11 eine Gasbefeuerung vorgesehen ist. Diese umfaßt einen Brenner 24 in einer Brennkammer 23, die mit den unteren Enden eines Paars von Rauchgasrohren 22 kommuniziert. Die Rauchgasrohre 22 sind bogenförmig um das Gebläserad 13 gekrümmt (siehe Fig. 5) nach oben geführt und münden in einen Abzug 25. Ansonsten entspricht diese Ausführungsform der vorher gezeigten.

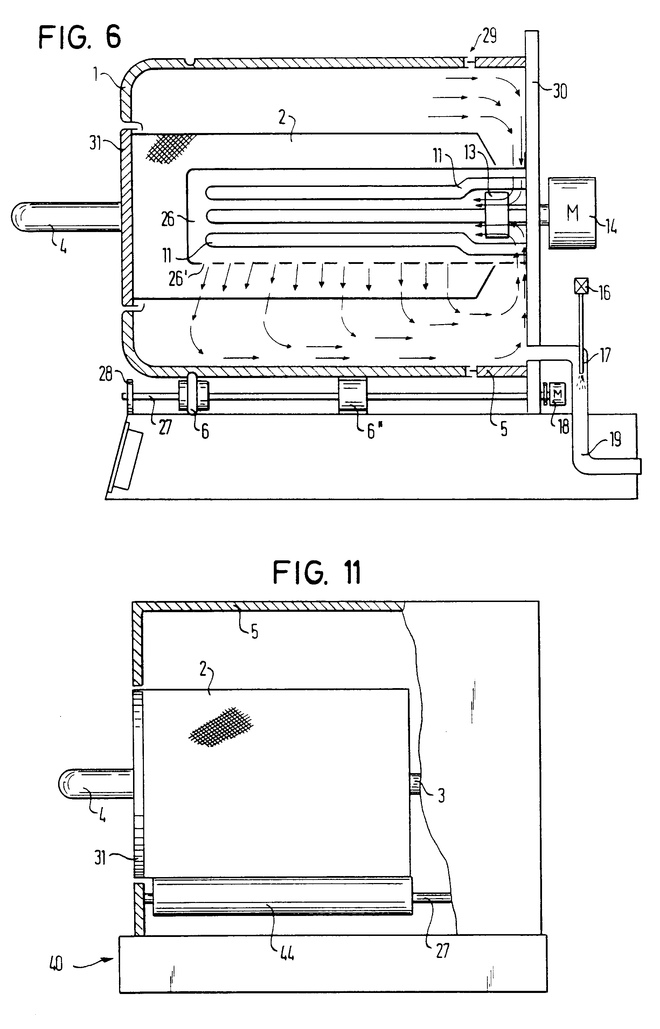

Die in Fig. 6 gezeigte zweite Ausführungsform der Erfindung unterscheidet sich von der zuvor gezeigten Ausführungsform dadurch recht wesentlich, daß der Luftstrom in der umgekehrten Richtung geführt ist. Bei dieser Ausführungsform der Erfindung tritt nämlich die Luft aus dem Inneren des Korbs 2 durch dessen Öffnungen nach außen, strömt in Richtung auf die Gehäuseplatte 30 und wird dort von einem Axialgebläserad 13 angesaugt und in Richtung auf die Endplatte 31 des Korbs 2 gefördert. Um eine günstige Strömungsverteilung und damit gleichmäßige Behandlung des Gargutes zu erzielen, ist im Inneren des Korbes 2 ein (gehäusefestes) Luftleitrohr 26 vorgesehen, das mindestens in seinem unteren Bereich Öffnungen 26' aufweist. Im Inneren des Luftleitrohres 26 erstrecken sich Widerstandsheizstäbe 11, die somit vollständig im Luftstrom liegen. Im übrigen entspricht diese Ausführungsform der Erfindung im wesentlichen den zuvor gezeigten Ausführungsformen.

Die pyrolytische Heizung ist bei dieser Ausführungsform der Erfindung nicht gesondert vorgesehen, sondern von einem Abschnitt der Heizstäbe 11 gebildet, welcher weniger von Luft umströmt wird, als die übrigen Abschnitte. Dadurch kann sich dort eine erhöhte Oberflächentemperatur des Heizkörpers ausbilden, so daß dort die Pyrolyse stattfindet. Selbstverständlich ist eine solche ungleichmäßige Erhitzung und damit Funktionsübernahme der Pyrolyse durch den eigentlichen Heizkörper auch bei der zuvor gezeigten Ausführungsform der Erfindung möglich.

In den Fig. 7 bis 10 sind verschiedene Ausführungsformen der Erfindung in ihrem Gesamtaufbau gezeigt. Hieraus ergibt sich, daß nicht nur Einzel-Systeme, sondern auch Mehrfach-Systeme leicht aufbaubar sind, da das erfindungsgemäße Gerät sehr kleinbauend und kompakt ist.

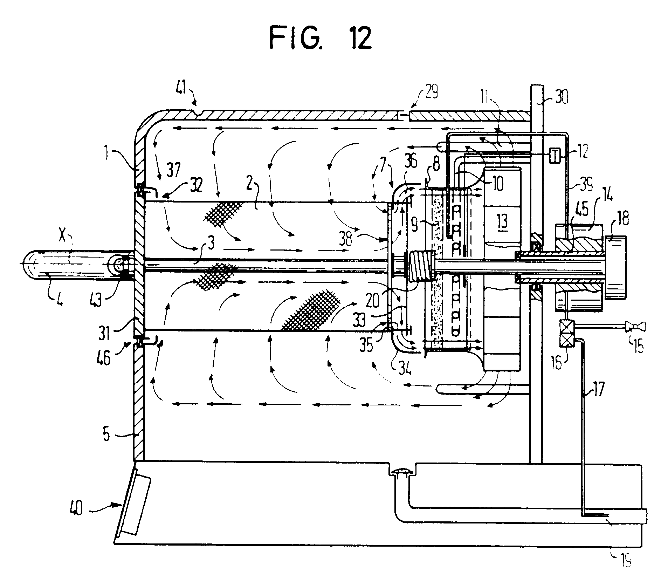

Bei der in Fig. 11 gezeigten Ausführungsform der Erfindung ist nur ein festes Gehäuse 5 vorgesehen, während der Korb 2 selbst drehbar gelagert ist. Zu diesem Zweck befindet sich im Gehäuse ein Paar von Wellen 27 mit darauf befindlichen Walzen 44 in einer Anordnung ähnlich der nach Fig. 1, so daß der Korb auf diesen Walzen liegt und mit diesen mitdrehen kann.

Bei einer anderen Ausführungsform der Erfindung, die in Fig. 12 gezeigt ist, wird der Antrieb des Korbes 2 durch die Gleitwelle 4 bewerkstelligt. Diese ist durch die koaxiale Bohrung einer Hohlwelle 45 geführt, über welche das Gebläserad 13 mit dem Gebläseantriebsmotor 14 verbunden ist. Am hinteren Ende des Motors 14 ist der Getriebemotor 18 angeflanscht, welcher den Korb in diesem Fall über die Gleitwelle 4 dreht. Die Gleitwelle 4 ist in der Hohlwelle 45 gelagert. Die Endplatte 31 kann in diesem Fall ebenfalls über ein Lager 46 im feststehenden Gehäuseteil 5 gelagert sein. Ansonsten entspricht diese Ausführungsform der Erfindung den zuvorgezeigten Ausführungsformen, wobei durch die feststehende Bauweise des Gehäuses 5 insbesondere ästhetischen Gesichtspunkten Rechnung getragen werden kann.

Der hier rund eingezeigte Korb kann auch eine andere Form aufweisen, was insbesondere dann von Vorteil ist, wenn anderes Gargut, z. B. Würstchen, gegart werden soll. Zu diesem Zweck kann man ihn auch stillstehen lassen.

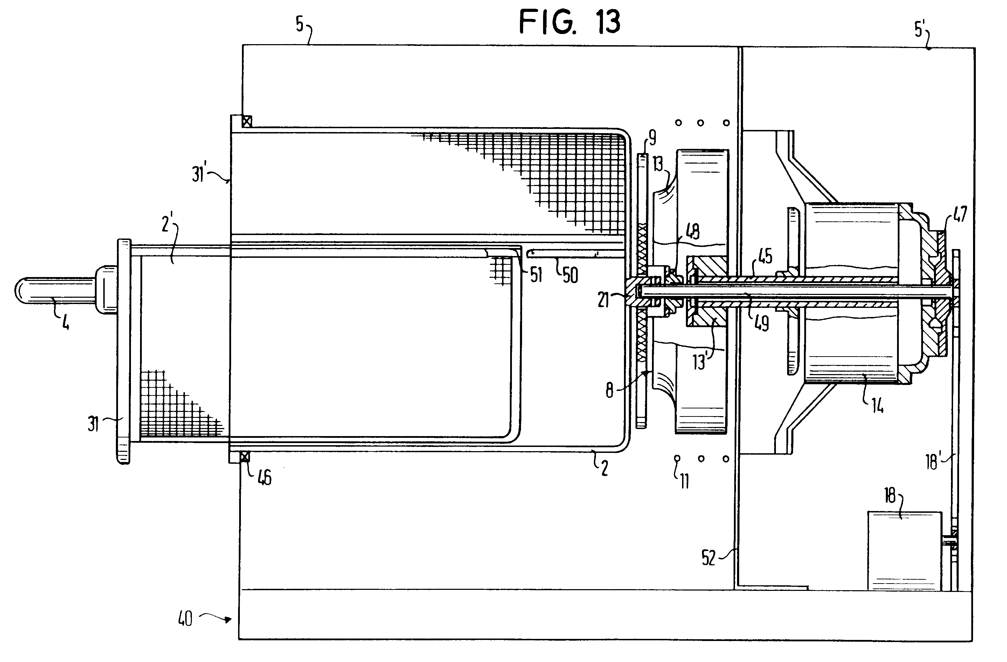

Die in Fig. 13 gezeigte bevorzugte Ausführungsform der Erfindung zeichnet sich insbesondere dadurch von der zuvor beschriebenen Ausführungsform der Erfindung aus, daß sowohl der Korb als auch dessen Antrieb anders ausgebildet sind.

Bei dieser Ausführungsform ist ein "äußerer" Korb 2 vorgesehen, in dessen Inneren ein Auszugskorb 2' gelagert ist. Zur Lagerung dient eine Einschubaufnahme 50 in dem Korb 2 und eine entsprechende Halteschiene 51 am Auszugskorb 2'.

Der Korb 2 ist an seinem gehäuseinneren Ende mit einer Aufnahme 21 versehen, über welche er in eine drehfeste Verbindung mit dem Ende einer Antriebswelle 49 gebracht und auf dieser (entgegen der Schwerkraft) gehalten werden kann. Der Gebläsemotor 14 ist an einer Zwischenwand 52 des Gehäuses 5 so abgebracht, daß er außerhalb des beheizten Raumes sitzt und ist (wie bei der zuvor beschriebenen Ausführungsform) mit einer Hohlwelle 45 ausgestattet. Das Gebläserad 13 weist eine Nabe 13' auf, die mit einer Bohrung ausgestattet ist. Die Antriebswelle 49 ist durch die Hohlwelle 45 und die Bohrung der Nabe 13' hindurchgeführt und am gehäuseäußeren Ende (an der Hinterseite des Gebläsemotors 14) über ein erstes Wellenlager 47 und am gehäuseinneren Ende über ein zweites Wellenlager 48 gelagert. Dadurch ist die Welle 49 kippfest gelagert.

An ihrem gehäuseäußeren Ende steht die Antriebswelle 49 über eine Antriebskette 18' mit dem Getriebemotor 18 in drehfester Verbindung.

Der Korb 2 ist mittels eines Lagers 46 an seinem gehäuseäußeren Ende am Gehäuse 5 gelagert. Die Lagerung ist hierbei derart vorgenommen, daß man den Korb 2 zu Reinigungszwecken vollständig herausnehmen kann. Diese Ausführungsform der Erfindung zeichnet sich insbesondere dadurch aus, daß sehr wenige nicht abnehmbare Teile in das beheizte Gehäuseinnere ragen. Dadurch wird das Reinigen besonders einfach. Man kann nämlich den Korb 2 ebenso wie den Auszugskorb 2' herausnehmen und in einer Spülmaschine reinigen. Zum Reinigen des Gehäuseinneren wird die in Fig. 13 vordere Gehäuseabdeckung 5 entfernt (die hintere Gehäuseabdeckung 5' hinter der Zwischenwand 52 kann montiert bleiben), so daß dann alle wichtigen, zu reinigenden Teile leicht zugänglich sind. Selbstverständlich ist es auch bei dieser Ausführungsform der Erfindung möglich, die oben beschriebenen Spülleitungen vorzusehen. Weiterhin sind selbstverständlich auch alle anderen, zuvor beschriebenen Einzelmerkmale auf diese Ausführungsform der Erfindung mit den oben beschriebenen Vorteilen anwendbar.

## Patentansprüche

1. Gargerät, insbesondere für stückiges Gargut mit einem, um eine horizontale Achse (X) drehbar gelagerten Korb (2) mit Luftöffnungen zur Aufnahme des Gargutes; mit einer Antriebseinrichtung (18) zum Drehen des Korbes (2), die während des Garens über eine Antriebswelle (49) mit dem Korb (2) in drehfester Verbindung steht; mit einem Gehäuse (1, 5) zur Aufnahme des Korbes (2) und mit mindestens einer Heizung (11) und einem Gebläse (13, 14) zum Erwärmen von Luft, die das Gargut erhitzt,
**gekennzeichnet durch**
Luftleiteinrichtungen (8, 26, 33), welche die vom Gebläse (13, 14) geförderte Luft in einem Kreislauf über die Heizung in Axialrichtung des Korbmantels zu den Öffnungen, in Radialrichtung durch die Öffnungen und in Axialrichtung des Korbes (2) zurück zum Gebläse (13, 14) führen, wobei das Gebläse einen Antriebsmotor (14) mit einer Hohlwelle (45) und das Gebläserad (13) eine Nabe (13') mit mittiger Bohrung umfassen, und wobei die Antriebswelle (49) durch die Hohlwelle (45) und die Nabe (13') hindurchgeführt ist.

2. Gargerät nach Anspruch 1,
dadurch gekennzeichnet,
daß das Gehäuse wenigstens in einem, den Korb (2) umschließenden Abschnitt als Trommel (1) symmetrisch zur horizontalen Achse (X) ausgebildet und zusammen mit dem Korb (2) drehbar, vorzugsweise abnehmbar gelagert ist.

3. Gargerät nach Anspruch 1,
dadurch gekennzeichnet,
daß der Korb (2) mindestens abschnittsweise (Auszugskorb 2') aus dem Gehäuse (5) herausnehmbar ist.

4. Gargerät nach Anspruch 1,
dadurch gekennzeichnet,
daß die Antriebswelle (49) kippfest gelagert ist und der Korb (2) in seinem gehäuseinneren Ende vorzugsweise abnehmbar an der Antriebswelle (49) befestigt und an seinem gehäuseäußeren Ende am Gehäuse (5) drehbar gelagert (Lager 48) ist.

5. Gargerät nach einem der vorhergehenden Ansprüche,
dadurch gekennzeichnet,
daß der Antriebsmotor (18) derart ausgebildet ist, daß der Korb (2, 2') nach dem Abschalten des Antriebsmotors (18) eine definierte Winkelstellung aufweist.

6. Gargerät nach einem der vorhergehenden Ansprüche,
dadurch gekennzeichnet,
daß die Heizung (11) das radial nach außen fördernde Gebläse (13) im wesentlichen umgebend angeordnet ist.

7. Gargerät nach einem der vorhergehenden Ansprüche,
dadurch gekennzeichnet,
daß das Gebläserad (13, 14) außerhalb des Korbes (2) bei einem vorderen Korbrand (35) angeordnet ist.

8. Gargerät nach einem der vorhergehenden Ansprüche,
dadurch gekennzeichnet,
daß eine, ins Innere des Gehäuses (1, 5, 30) führende Ablaufleitung (19) vorgesehen ist und daß in der Ablaufleitung (19) eine Einrichtung (17) zum Niederschlagen von Dämpfen aus dem Inneren des Gehäuses vorgesehen ist.

9. Gargerät nach einem der vorhergehenden Ansprüche,
gekennzeichnet durch,
eine Einrichtung (39) zum Einspritzen von Wasser bei laufendem Gebläse (13, 14) zum Reinigen des Gargerätes.

## Claims

1. Cooking appliance, in particular for cooking material in lump form, having a basket (2) with air openings supported rotatably about a horizontal axis (X) for receiving the material to be cooked; having a drive device (18) for rotating the basket (2) and which during cooking is non-rotatably connected by a drive shaft (49) to the basket (2); having a housing (1, 5) for receiving the basket (2) and having at least one heating device (11) and a fan (13, 14) for warming air which heats the material to be cooked,
characterized by
air-directing devices (8, 26, 33), which circulate the air delivered by the fan (13, 14) by way of the heating device in an axial direction of the lateral area of the basket to the openings, in a radial direction through the openings and in an axial direction of the basket (2) back to the fan (13, 14), the fan comprising a drive motor (14) with a hollow shaft (45) and the impeller (13) comprising a hub (13') with a central bore, and the drive shaft (49) extending through the hollow shaft (45) and the hub (13').

2. Cooking appliance according to claim 1,
characterized in that
the housing at least in one portion enclosing the basket (2) is constructed as a drum (1) symmetrical to the horizontal axis (X) and is supported together with the basket (2) in a rotatable, preferably removable manner.

3. Cooking appliance according to claim 1,
characterized in that
the basket (2) is at least in sections (pull-out basket 2') removable from the housing (5).

4. Cooking appliance according to claim 1,
characterized in that
the drive shaft (49) is supported in a tilt-proof manner and the basket (2) at its inner end relative to the housing is preferably removably fastened to the drive shaft (49) and at its outer end relative to the housing is supported (bearing 48) rotatably on the housing (5).

5. Cooking appliance according to one of the preceding claims,
characterized in that
the drive motor (18) is constructed in such a way that the basket (2, 2') occupies a defined angular position after disconnection of the drive motor (18).

6. Cooking appliance according to one of the preceding claims,
characterized in that
the heating device (11) is disposed in such a way that it substantially surrounds the fan (13) delivering air in a radially outward direction.

7. Cooking appliance according to one of the preceding claims,
characterized in that
the impeller (13, 14) is disposed outside of the basket (2) adjacent to a front basket edge (35).

8. Cooking appliance according to one of the preceding claims,
characterized in that
a discharge line (19) leading into the interior of the housing (1, 5, 30) is provided and that provided in the discharge line (19) is a device (17) for condensing vapours from the interior of the housing.

9. Cooking appliance according to one of the preceding claims,
characterized by
a device (39) for injecting water while the fan (13, 14) is in operation for the purpose of cleaning the cooking appliance.

## Revendications

1. Appareil de cuisson, en particulier d'aliments en morceaux, comportant un panier (2) monté tournant autour d'un axe horizontal (X), ayant des ouvertures de passage d'air et destiné à recevoir les aliments à cuire, un dispositif moteur (18) destiné à faire tourner ce panier (2) et, pendant la cuisson, solidarisé en rotation avec celui-ci par un arbre de transmission (49), un carter (1, 5) destiné à recevoir le panier (2), et au moins un dispositif de chauffage (11) et un ventilateur (13, 14) pour le chauffage d'air qui chauffe les aliments à cuire,
caractérisé par
des dispositifs déflecteurs d'air (8, 26, 33) qui dirigent l'air refoulé par le ventilateur (13, 14), dans un circuit, pour qu'il passe par le dispositif de chauffage et aille aux ouvertures dans la direction axiale de la surface latérale du panier, passe par les ouvertures dans la direction radiale et revienne au ventilateur (13, 14) dans la direction axiale du panier (2), le ventilateur comprenant un moteur d'entraînement (14) ayant un arbre creux (45) et la roue de ventilateur (13) comprenant un moyeu (13') à alésage central, et l'arbre de transmission (49) traversant cet arbre creux (45) et ce moyeu (13').

2. Appareil de cuisson selon la revendication 1, caractérisé en ce que le carter est, au moins dans une partie entourant le panier (2), symétrique par rapport à l'axe horizontal (X) et constitué d'un tambour (1) et est monté de façon à pouvoir tourner avec le panier (2) et de préférence de manière amovible.

3. Appareil de cuisson selon la revendication 1, caractérisé en ce que le panier (2) peut être enlevé au moins en partie (panier extractible 2') du carter (5).

4. Appareil de cuisson selon la revendication 1, caractérisé en ce que l'arbre de transmission (49) est monté de façon à ne pas pouvoir basculer et le panier (2) est, à son extrémité intérieure au carter, fixé de préférence de manière amovible à l'arbre de transmission (49) et, à son extrémité extérieure au carter, monté tournant sur le carter (5) (palier 48).

5. Appareil de cuisson selon l'une des revendications précédentes, caractérisé en ce que le moteur d'entraînement (18) est conçu de façon telle qu'après son arrêt, le panier (2, 2') ait une position angulaire définie.

6. Appareil de cuisson selon l'une des revendications précédentes, caractérisé en ce que le dispositif de chauffage (11) est placé de façon à sensiblement entourer le ventilateur (13) refoulant radialement vers l'extérieur.

7. Appareil de cuisson selon l'une des revendications précédentes, caractérisé en ce que la roue de ventilateur (13, 14) est placée à l'extérieur du panier (2) près d'un bord avant (35) de celui-ci.

8. Appareil de cuisson selon l'une des revendications précédentes, caractérisé en ce qu'il est prévu une conduite d'évacuation (19) partant de l'intérieur du carter (1, 5, 30) et que dans cette conduite d'évacuation (19) est prévu un dispositif (17) de précipitation des vapeurs sortant du carter.

9. Appareil de cuisson selon l'une des revendications précédentes, caractérisé par un dispositif (39) d'injection d'eau pendant que le ventilateur (13, 14) tourne, pour le nettoyage de l'appareil de cuisson.
